# EUROPÄISCHE PATENTANMELDUNG

(11) **EP 3 770 083 A1**
(43) Veröffentlichungstag der Anmeldung: **27.01.2021**
(21) Anmeldenummer: 20185241.5
(22) Anmeldetag: 10.07.2020
(51) Int. Cl.: B65G 7/00, B65G 9/00, B65G 47/91, B65G 17/20, B66C 1/02

(54) **UNTERDRUCK-ZUFÜHREINRICHTUNG**

(30) Priorität: 23.07.2019 DE 102019119818
(71) Anmelder: J. Schmalz GmbH, 72293 Glatten (DE)
(72) Erfinder: Schmalz, Dr. Kurt, 72280 Dornstetten (DE); Schittenhelm, Florian, 72270 Baiersbronn (DE)
(74) Vertreter: DREISS Patentanwälte PartG mbB

(57) **Zusammenfassung**

Die Erfindung betrifft eine Unterdruck-Zuführeinrichtung (10), umfassend einen Träger (14) mit einem integrierten und mit Unterdruck beaufschlagbaren Versorgungskanal (30), und einen an dem Träger verfahrbaren Laufwagen (18), wobei der Träger an einer Abgreifseite (22) wenigstens eine Trägeröffnung (24) zum Abgreifen des Unterdrucks aufweist, wobei ein Dichtungsband (60) vorgesehen ist, welches dazu ausgebildet ist, in einer Dichtlage (62) die wenigstens eine Trägeröffnung dichtend zu verschließen und welches aus der Dichtlage in eine Öffnungslage (64) von der Trägeröffnung abhebbar ist, wobei eine von dem Träger und dem Dichtungsband separat bereitgestellte Dichtungsleiste vorgesehen ist, welche zwischen Träger und Dichtungsband derart angeordnet ist, dass sie die wenigstens eine Trägeröffnung bedeckt, wobei die Dichtungsleiste eine Mehrzahl von Öffnungen aufweist, wobei das Dichtungsband in der Dichtlage an der Dichtungsleiste anliegt und wobei das Dichtungsband in der Öffnungslage von der Dichtungsleiste beabstandet ist.

## Beschreibung

Die Erfindung betrifft eine Unterdruck-Zuführeinrichtung gemäß dem Oberbegriff des Anspruchs 1.

Solche Unterdruck-Zuführeinrichtungen sind z.B. in der US 2,923,227 und der US 3,478,668 beschrieben. Die Vorrichtungen ermöglichen es, einen Unterdruck-Versorgungskanal an einer kontinuierlich verlagerbaren Position abzugreifen. Die genannten Vorrichtungen umfassen einen Träger mit einem integrierten und mit Unterdruck beaufschlagbaren Versorgungskanal und einen an dem Träger verfahrbaren Laufwagen. Der Laufwagen weist eine Laufwagen-Saugkammer auf, welche dazu ausgebildet ist, um mit einer Saugeinheit, bspw. einem Sauggreifer zum Ansaugen und Handhaben von Gegenständen, verbunden zu werden. Der Träger weist an einer Abgreifseite eine Trägeröffnung auf, welche eine Versorgungskanalöffnung bildet und von einem Dichtungsband verschlossen ist. Ein in dem Versorgungskanal herrschender Unterdruck führt dazu, dass das Dichtungsband an der Versorgungskanalöffnung festgesaugt ist und dadurch die Versorgungskanalöffnung weitgehend dicht verschlossen ist. Zum Abgreifen des Unterdrucks von dem Träger ist an dem Laufwagen eine Dichtungsband-Führungseinrichtung vorgesehen, welche dazu ausgebildet ist, das Dichtungsband von der Trägeröffnung abzuheben. Dadurch wird die Trägeröffnung innerhalb der Laufwagen-Saugkammer abschnittsweise freigegeben. Außerhalb der Laufwagen-Saugkammer ist die Trägeröffnung jedoch weiterhin von dem Dichtungsband verschlossen. Dies ermöglicht es, über die Laufwagen-Saugkammer an einer entlang des Trägers verlagerbaren Abgriffposition Unterdruck abzugreifen und z.B. eine mit der Laufwagen-Saugkammer gekoppelte Saugeinheit zu betreiben.

In der US 2,923,227 ist eine Unterdruck-Zuführeinrichtung mit den Merkmalen des Oberbegriffs des Anspruchs 1 gezeigt, wobei der Träger als Hohlprofil mit einem Längsschlitz ausgebildet ist. Das Dichtungsband ist als flexibles Band ausgebildet und liegt in einer Dichtlage an dem Träger an. Einen ähnlichen Aufbau zeigt auch die US 3,478,668 bekannt, wobei der Träger mehrere Trägeröffnungen aufweist, welche über eine Längserstreckung des Trägers hinweg verteilt angeordnet sind.

Bei den Unterdruck-Zuführeinrichtungen soll insbesondere vermieden werden, dass das Dichtungsband in seiner Dichtlage an dem Träger in die Trägeröffnung eingesaugt wird und dann verklemmt.

Die vorliegende Erfindung soll einen zuverlässigen Betrieb einer Unterdruck-Zuführeinrichtung der genannten Art ermöglichen. Darüber hinaus ist eine kompakte und kostengünstige Bauweise wünschenswert.

Diese Aufgabe wird durch eine Unterdruck-Zuführeinrichtung mit den Merkmalen des Anspruchs 1 gelöst.

Die Unterdruck-Zuführeinrichtung umfasst einen Träger und einen an dem Träger verfahrbaren Laufwagen.

Der Träger weist einen integrierten und mit Unterdruck beaufschlagbaren Versorgungskanal auf. Der Versorgungskanal ist insofern insbesondere innenliegend, also von dem Träger begrenzt. Der Träger bildet sowohl ein Tragwerk für den Laufwagen als auch eine Unterdruckführung. Beispielsweise ist es denkbar, dass der Träger von einem Kranausleger eines Krans bereitgestellt ist. Vorzugsweise ist der Träger als Hohlprofil ausgebildet und umfasst wenigstens einen Hohlraum und wenigstens eine Hohlraumöffnung. Der Hohlraum bildet dann den Versorgungskanal und die Hohlraumöffnung die wenigstens eine Trägeröffnung.

Der Träger weist an einer Abgreifseite wenigstens eine Trägeröffnung auf, durch welche das Abgreifen des Unterdrucks erfolgt. Es ist denkbar, dass mehrere, entlang der Längserstreckung des Trägers verteilt angeordnete Trägeröffnungen vorgesehen sind. Es ist auch denkbar, dass lediglich eine Trägeröffnung vorgesehen, welche sich entlang der gesamten Längserstreckung des Trägers, bspw. in Form eines Längsschlitzes, erstreckt.

Die Unterdruck-Zuführeinrichtung umfasst ferner ein Dichtungsband, welches dazu ausgebildet ist, in einer Dichtlage die wenigstens eine Trägeröffnung dichtend zu verschließen. Dabei ist das Dichtungsband derart angeordnet, dass es aus der Dichtlage in eine Öffnungslage überführbar ist, wobei das Dichtungsband in der Öffnungslage von der Trägeröffnung abgehoben ist.

Der Laufwagen weist einen Laufwagengrundkörper auf, welcher eine in Richtung der Abgreifseite des Trägers offene Laufwagen-Saugkammer begrenzt. Die Laufwagen-Saugkammer ist insbesondere dazu ausgebildet, mit einem Sauganschluss, beispielsweise einem Sauganschluss eines Sauggreifer, verbunden zu werden. Zu diesem Zweck kann der Laufwagengrundkörper einen Anschlussstutzen zur Strömungsverbindung der Laufwagen-Saugkammer mit einem Sauganschluss aufweisen.

Ferner ist ein eine Laufwagen-Dichteinrichtung vorgesehen, welche dazu ausgebildet ist, die Laufwagen-Saugkammer mit ihrer Öffnung an der Abgreifseite des Trägers abzudichten.

Die Unterdruck-Zuführeinrichtung umfasst ferner eine, insbesondere innerhalb der Laufwagen-Saugkammer angeordnete, Dichtungsband-Führungseinrichtung, welche dazu ausgebildet ist, das Dichtungsband innerhalb der Laufwagen-Saugkammer über definierte Länge (Abgreiflänge) aus seiner Dichtlage in die Öffnungslage abzuheben. Das Dichtungsband ist in der Öffnungslage derart angeordnet ist, dass die wenigstens eine Trägeröffnung zumindest teilweise freigegeben ist. Außerhalb der Laufwagen-Saugkammer befindet sich das Dichtungsband dann weiterhin in seiner Dichtlage. Insofern ist die wenigstens eine Trägeröffnung nur innerhalb der Laufwagen-Saugkammer geöffnet und ansonsten von dem Dichtungsband verschlossen. Die Laufwagen-Saugkammer und der Versorgungskanal sind dann in dem Bereich, in dem das Dichtungsband in seiner Öffnungslage abgehoben ist, miteinander strömungs- und druckverbunden, sodass die Laufwagen-Saugkammer über den Versorgungskanal mit Unterdruck beaufschlagt werden kann.

Die Unterdruck-Zuführeinrichtung umfasst außerdem eine von dem Träger und dem Dichtungsband separat bereitgestellte Dichtungsleiste, welche zwischen Träger und Dichtungsband derart angeordnet ist, dass sie die wenigstens eine Trägeröffnung bedeckt. Die Dichtungsleiste weist eine Mehrzahl von Öffnungen auf, welche gemeinsam mit der wenigstens einen Trägeröffnung die Versorgungskanalöffnungen des Versorgungskanals bilden. Das Dichtungsband liegt in seiner Dichtlage an der Dichtungsleiste an, so dass die Öffnungen der Dichtungsleiste verschlossen sind. In der Öffnungslage ist das Dichtungsband von der Dichtungsleiste abgehoben, also beabstandet von der Dichtungsleiste angeordnet. Dann sind die Öffnungen der Dichtungsleiste - und somit die Versorgungskanalöffnungen - freigegeben, sodass die Laufwagen-Saugkammer mit Unterdruck beaufschlagt wird.

Das Dichtungsband liegt insofern - anders als bei den aus dem Stand der Technik bekannten Unterdruck-Zuführeinrichtungen - in seiner Dichtlage nicht direkt an dem Träger, sondern an der Dichtungsleiste an. Die Dichtungsleiste bildet also eine zusätzliche Abstützung für das Dichtungsband, wodurch ein Einsaugen des Dichtungsbands in die wenigstens eine Trägeröffnung verhindert wird. Eine Abheben und Andrücken des Dichtungsbands kann dann besonders zuverlässig erfolgen. Ferner wird eine Abdichtung der wenigstens einen Trägeröffnung durch das Dichtungsband verbessert, was für einen zuverlässigen und effizienten Betrieb (geringe Leckage) der Unterdruck-Zuführeinrichtung vorteilhaft ist. Insbesondere ermöglicht es eine solche Ausgestaltung, kostengünstige herstellbare Hohlprofile mit Längsschlitz (bspw. stranggepresste C-Profile) als Träger zu verwenden und trotzdem sicherzustellen, dass das Dichtungsbands nicht in den Längsschlitz eingesaugt wird.

Ein weiterer Vorteil ergibt sich daraus, dass die Dichtungsleiste von dem Träger separat bereitgestellt ist, die Dichtungsleiste also nicht Teil des Trägers und somit nicht Teil der den Laufwagen tragenden Struktur ist. Insofern muss die Dichtungsleiste keine Tragfunktion erfüllen. Tragfunktion und Dichtfunktion sind insbesondere voneinander entkoppelt. Dies ermöglicht es insbesondere, die Dichtungsleiste - unabhängig von statischen Anforderungen an den Träger - bspw. im Hinblick auf eine möglichst gute Dichtwirkung im Zusammenspiel mit dem Dichtungsband auszubilden. Es ist beispielsweise denkbar, den Träger aus einem vergleichsweise steifen Material auszubilden, die Dichtungsleiste hingegen aus einem vergleichsweise weichen Material herzustellen, was eine Abdichtung zwischen Dichtungsband und Dichtungsleiste begünstigt.

Darüber hinaus ermöglicht es ein solcher modularer Aufbau aus Träger und separat bereitgestellter Dichtungsleiste, Unterdruck-Zuführeinrichtungen bedarfsgerecht für unterschiedliche Anforderungen flexibel und kosteneffizient bereitzustellen. Es ist beispielsweise denkbar, einen Standard-Träger vorzuhalten (bspw. in Form eines kostengünstig herstellbaren Hohlprofils mit Längsschlitz), welcher mit verschiedenartig ausgebildeten Dichtungsleisten (bspw. im Hinblick auf Anzahl und Anordnung der Öffnungen, Materialien, etc.) modular kombinierbar ist, um unterschiedlichen Anforderungen bspw. in Bezug auf Luftdurchfluss, maximalen Unterdruck, etc. gerecht zu werden.

Im Rahmen einer vorteilhaften Ausgestaltung sind die Öffnungen in der Dichtungsleiste als Langlöcher ausgebildet. Vorzugsweise sind die Langlöcher derart orientiert, dass sie sich länglich entlang der Längserstreckung der Dichtungsleiste erstreckt. Eine solche Ausgestaltung begünstigt ein kontinuierliches, gleichmäßiges Abgreifen des Unterdrucks beim Verfahren des Laufwagens an dem Träger. Zu diesem Zweck ist es besonders bevorzugt, wenn die Öffnungen als insbesondere gerade verlaufende Öffnungsreihe angeordnet sind, wobei die Öffnungsreihe vorzugsweise längs zu der Längserstreckung der Dichtungsleiste ausgerichtet ist. Insbesondere sind mehrere Öffnungsreihen vorgesehen, welche in einer Querrichtung der Dichtungsleiste betrachtet voneinander beabstandet angeordnet sind und entlang der Längserstreckung der Dichtungsleiste versetzt angeordnet sind. Die Langlöcher können sich gerade erstrecken. Es kann jedoch auch vorteilhaft sein, wenn die Langlöcher nicht gerade erstreckend ausgebildet sind, sondern entlang einer geknickten oder gekrümmten Kurve verlaufen, beispielsweise Z-förmig.

Vorzugsweise sind die Dichtungsleiste und das Dichtungsband derart aneinander angepasst abgestimmt, dass das Dichtungsband in seiner Dichtlage über die gesamte Breite der Dichtungsleiste an dieser anliegt. Insbesondere weisen die Dichtungsleiste und das Dichtungsband im Wesentlichen dieselbe Breite auf. Hierdurch kann zum einen sichergestellt werden, dass die Öffnungen in der Dichtungsleiste von dem Dichtungsband in dessen Dichtlage vollständig verschlossen sind. Zum anderen wird das Risiko eines Verbiegens des Dichtungsbands - welches bspw. bei einem über die Dichtungsleiste seitlich überstehenden Dichtungsband auftreten kann - reduziert, was eine zuverlässige Funktion der Unterdruck-Zuführeinrichtung begünstigt. Es kann aber auch vorteilhaft sein, dass das Dichtungsband eine geringere Breite (senkrecht zur Längserstreckung) aufweist, als die Dichtungsleiste. Dabei ist die Breite des Dichtungsbandes vorzugsweise derart, dass die die Öffnungen in der Dichtungsleiste von dem Dichtungsband in dessen Dichtlage vollständig verschlossen sind. Dadurch können Überlappungen von Materialüberständen vermieden werden.

Eine weitere vorteilhafte Ausgestaltung besteht darin, dass die Dichtungsleiste aus einem Kunststoff hergestellt ist, insbesondere vollständig daraus besteht. Insbesondere ist die Dichtungsleiste aus einem Kunststoff-Schaum hergestellt. Eine solche Dichtungsleiste ist nachgiebig und kann sich an das Dichtungsband anpassen, was insbesondere bei vergleichsweise steifen Dichtungsband-Materialien für eine leckagefreie Abdichtung vorteilhaft ist. Durch die Dichtungsleiste können Unebenheiten in dem Dichtungsband, z.B. Dellen, beim Andrücken des Dichtungsbands an die Dichtungsleiste ausgeglichen werden.

Ferner ist es bevorzugt, wenn das Dichtungsband aus Metall hergestellt ist, insbesondere daraus besteht. Ein solches Dichtungsband ist robust und verschleißarm, was die Lebensdauer der Unterdruck-Zuführeinrichtung erhöht. Vorzugsweise ist das Dichtungsband aus Stahl hergestellt. Eine besonders vorteilhafte Ausgestaltung besteht darin, dass das Dichtungsband aus Metall hergestellt ist und dass und die Dichtungsleiste aus einem Kunststoff-Schaum hergestellt ist. Eine solche Materialkombination ist robust und ermöglicht eine geringe Leckage der Vorrichtung.

Bei einer vorteilhaften Ausgestaltung kann die Abgreifseite des Trägers eine Nut aufweisen, in welcher die Dichtungsleiste angeordnet ist. Die Dichtungsleiste ist dann sicher an dem Träger gehalten, was eine Abdichtung der Trägeröffnung begünstigt. Die Nut ist vorzugsweise derart ausgebildet, dass die Breite der Nut geringer ist als die Breite des Trägers. Insofern ist die Breite der Dichtungsleiste geringer als die Breite des Trägers. Insbesondere ist die Dichtungsleiste in der Nut derart angeordnet, dass eine Oberseite der Dichtungsleiste mit einer die Nut begrenzenden Außenwand des Trägers an der Abgreifseite bündig ist. Die Dichtungsleiste und die Außenwand des Trägers bilden insofern eine ebene Fläche an der Abgreifseite, was eine Abdichtung der Laufwagen-Saugkammer mittels der Laufwagen-Dichteinrichtung begünstigt. Mit Oberseite ist insbesondere diejenige Seite der Dichtungsleiste gemeint, welche in einem montierten Zustand der Dichtungsleiste dem Träger abgewandt ist.

Im Rahmen einer weiteren Ausführungsform kann die Unterdruck-Zuführeinrichtung einen Einleger, insbesondere aus Kunststoff, umfassen, welcher zwischen Dichtungsleiste und Träger angeordnet ist und die Trägeröffnung bedeckt. Der Kunststoffeinleger liegt in einer Richtung quer zu der Längserstreckung des Trägers zumindest abschnittsweise an dem Träger an. Insbesondere weist der Einleger eine Mehrzahl von Öffnungen auf. Der Einleger begrenzt also den Versorgungskanal in Richtung der Abgreifseite des Trägers. Vorzugsweise erstreckt sich der Einleger entlang der gesamten Längserstreckung des Trägers. Dadurch, dass der Einleger in einer Richtung quer zu der Längserstreckung des Trägers zumindest abschnittsweise an dem Träger anliegt, können Querkräfte zwischen dem Einleger und dem Träger übertragen werden. Der Einleger versteift also den Träger, wodurch insbesondere Gefahr einer unterdruckbedingten Implosion des Trägers reduziert werden kann. Zu diesem Zweck ist es besonders bevorzugt, wenn der Einleger eine Mehrzahl von Querstreben aufweist.

Bei einer Ausgestaltung der Unterdruck-Zuführeinrichtung mit Einleger ist die Dichtungsleiste dann an der dem Träger abgewandten Seite des Einlegers angeordnet. Die Öffnungen des Einlegers bilden dann gemeinsam mit den Öffnungen der Dichtungsleiste und der Trägeröffnung die Versorgungskanalöffnungen. Besonders bevorzugt ist es, wenn die Öffnungen des Einlegers und die Öffnungen der Dichtungsleiste aufeinander abgestimmt sind, insbesondere gleich dimensioniert und angeordnet sind. Vorzugsweise sind der Einleger und die Dichtungsleiste derart ausgebildet und angeordnet, dass die Öffnungen des Einlegers und die Öffnungen der Dichtungsleiste in einem montierten Zustand der Dichtungsleiste an dem Einleger miteinander fluchten. Insbesondere sind Dichtungsleiste und Einleger miteinander verklebt.

Besonders bevorzugt ist es, wenn der Einleger in einer Nut an der Abgreifseite des Trägers angeordnet ist. Dann können Kräfte zwischen dem Träger und dem Einleger sicher übertragen werden. Zudem wird eine genaue Positionierung des Einlegers relativ zu der Trägeröffnung begünstigt.

Um eine positionsgenaue und sichere Befestigung der Dichtungsleiste an dem Einleger zu gewährleisten, ist es ferner bevorzugt, wenn der Einleger eine, insbesondere an der dem Träger abgewandten Seite des Einlegers angeordnete, Nut zur Aufnahme der Dichtungsleiste aufweist. Hierdurch kann insbesondere sichergestellt werden, dass der Einleger und die Dichtungsleiste derart relativ zueinander positioniert sind, dass die Öffnungen des Einlegers und die Öffnungen der Dichtungsleiste miteinander fluchten.

Eine besonders vorteilhafte Ausgestaltung besteht darin, dass die Nut zur Aufnahme des Einlegers an der Abgreifseite des Trägers, die Nut zur Aufnahme der Dichtungsleiste an dem Einleger, sowie der Einleger und die Dichtungsleiste derart dimensioniert und aufeinander abgestimmt sind, dass eine Oberseite der Dichtungsleiste mit der Außenwand des Trägers an der Abgreifseite bündig ist. Hierdurch wird eine Abdichtung der Laufwagen-Saugkammer an der Abgreifseite mittels der Laufwagen-Dichteinrichtung begünstigt. Mit Oberseite ist insbesondere diejenige Seite der Dichtungsleiste gemeint, welche in einem montierten Zustand der Dichtungsleiste dem Träger und dem Einleger abgewandt ist.

Für eine effektive Abdichtung der Laufwagen-Saugkammer an dem Träger und dem Dichtungsband ist es ferner bevorzugt, wenn die Laufwagen-Dichteinrichtung eine erste Dichteinheit und eine zweite Dichteinheit umfasst, wobei die erste Dichteinheit dazu ausgebildet ist, in einem montierten Zustand des Laufwagens, an dem Träger und an dem Dichtungsband dichtend anzulegen und wobei die zweite Dichteinheit dazu ausgebildet ist, die erste Dichteinheit gegen den Träger bzw. gegen das Dichtungsband mit einer Anpresskraft zu beaufschlagen. Die erste Dichteinheit kann z.B. als Gleitdichtung ausgebildet sein. Die zweite Dichteinheit kann als weiche Dichtschnur (bspw. Moosgummischnur, Silikonschnur, etc.) ausgebildet sein. Es ist auch denkbar, dass die zweite Dichteinheit eine pneumatische oder hydraulische Krafterzeugungseinheit umfasst, welche die erste Dichteinheit mit einer definierten Anpresskraft gegen den Träger bzw. gegen das Dichtungsband beaufschlagt.

Ferner ist es grundsätzlich bekannt, dass die Dichtungsband-Führungseinrichtung wenigstens eine Abheberolle umfasst, über welche das Dichtungsband derart geführt ist, dass das Dichtungsband aus der Dichtlage in die Öffnungslage überführt wird (also von der Dichtungsleiste abgehoben wird) und wobei die Dichtungsband-Führungseinrichtung wenigstens zwei Außenrollen zum Heranführen des Dichtungsbands an die Dichtungsleiste (also zum Überführen des Dichtungsband aus der Öffnungslage in die Dichtlage) umfasst. Insbesondere ist eine erste Außenrolle entlang einer Verfahrachse des Laufwagens betrachtet vor der wenigstens einen Abheberolle angeordnet und eine zweite an Außenrolle entlang der Verfahrachse des Laufwagens hinter der wenigstens einen Abheberolle angeordnet. Insofern sind die Außenrollen derart angeordnet, dass sie das von der Abheberolle abgehobene Dichtungsband vor und hinter der Abheberolle wieder an die Dichtungsleiste heranführen. Das Dichtungsband ist also lediglich in dem Bereich zwischen den wenigstens zwei Abheberollen von der Dichtungsleiste abgehoben. Insofern definiert der Abstand der beiden Außenrollen zueinander die Abgreiflänge.

Besonders bevorzugt ist es, wenn eine Breite einer jeweiligen Außenrolle größer ist als eine Breite des Dichtungsbands und wenn die wenigstens zwei Außenrollen abschnittsweise an einer Außenwand des Trägers an der Abgreifseite anliegen. Dann können in Folge des Unterdrucks auftretende Normalkräfte, welche den Laufwagen gegen den Träger drücken, über die Außenrollen auf den Träger übertragen werden. Hierdurch kann die Gefahr eines Eindrückens des Dichtungsbands in die Trägeröffnung weiter reduziert werden. Insbesondere können auf diese Weise zusätzliche laterale Abstützrollen eingespart werden, was einen kompakten Aufbau der Unterdruck-Zuführeinrichtung begünstigt. Für einen zuverlässigen Betrieb der Unterdruck-Zuführeinrichtung und ein leichtgängiges Verfahren des Laufwagens, ist es ferner bevorzugt, wenn die wenigstens eine Abheberolle und/oder die wenigstens zwei Außenrollen in Wälzlagern an dem Laufwagengrundkörper gelagert sind.

Eine weitere vorteilhafte Ausgestaltung besteht darin, dass der Laufwagen einen Fahrwerksträger mit wenigstens einer Laufrolle umfasst, wobei der Laufwagen über die wenigstens eine Laufrolle auf derjenigen Seite des Trägers verfahrbar gelagert ist, welche der Abgreifseite gegenüberliegt. Eine solche Ausgestaltung ermöglicht eine hängende Konstruktion des Laufwagens. Insbesondere sind keine lateralen Laufräder wie in einigen Ausgestaltungen des Standes der Technik erforderlich, was einen kompakten Aufbau der Unterdruck-Zuführeinrichtung mit geringeren Störkonturen begünstigt.

Eine weitere bevorzugte Ausgestaltung der Unterdruck-Zuführeinrichtung sieht vor, dass der Versorgungskanal in mehrere, durch Trägerzwischenwände voneinander abgetrennte Saugkammern unterteilt ist. Insbesondere mündet jede Saugkammer über mindestens eine Saugkammeröffnung in die Abgreifseite des Trägers. Die Saugkammeröffnungen bilden insofern gemeinsam die Versorgungskanalöffnung. Ein derart ausgebildeter Träger ist leicht und trotzdem stabil. Insbesondere kann durch die Unterteilung des Versorgungskanals in Saugkammern das Risiko einer unterdruckbedingten Implosion des Trägers reduziert werden. Ferner ermöglicht es eine solche Ausgestaltung mehrere Dichtungsbänder vorzusehen, wobei jeder Saugkammer ein Dichtungsband zugeordnet ist. Dann können an einem Träger mehrerer Laufwägen angeordnet sein und voneinander unabhängig mit Unterdruck beaufschlagt werden. Zu diesem Zweck ist es bevorzugt, wenn die Saugkammern voneinander unabhängig mit Unterdruck beaufschlagbar sind. Es ist beispielsweise denkbar, dass der Träger eine im Querschnitt im Wesentlichen U-förmige Außenwand aufweist, welche einen einseitig offenen Hohlraum (Versorgungskanal) begrenzt, wobei der Träger eine Mehrzahl von innerhalb des Hohlraums angeordneten und sich entlang der Längserstreckung des Trägers erstreckenden Trägerstegen aufweist, welche in einer Querrichtung des Trägers betrachtet voneinander beabstandet sind und den Hohlraum (Versorgungskanal) in Kammern (Saugkammern) unterteilt. Die offene Seite des U-Profils bildet dann die Abgreifseite des Trägers. Insofern sind die Saugkammern in Richtung der Abgreifseite offen. Ein solcher Träger vergleichsweise kostengünstig herstellbar, bspw. in einem Extrusionsverfahren.

Unabhängig von voranstehend genannten Ausgestaltungen kann die Unterdruck-Zuführeinrichtung ferner eine Dichtungsband-Spanneinrichtung aufweisen, welche dazu ausgebildet ist, das Dichtungsband entlang einer Längserstreckung des Dichtungsbands zu spannen. Hierdurch wird ein Andrücken des Dichtungsbands an die Dichtungsleiste und somit ein Abdichten der Versorgungskanalöffnungen begünstigt. Insbesondere kann ein Wölben bzw. Verklemmen des Dichtungsbands reduziert werden.

Die Erfindung wird im Folgenden anhand der Figuren näher erläutert.

Es zeigen:
- Figur 1: skizzierte Darstellung einer Unterdruck-Zuführeinrichtung in einer Seitenansicht;
- Figur 2a: skizzierte Darstellung der Unterdruck-Zuführeinrichtung gemäß Figur 1 in einer Schnittansicht;
- Figur 2b: in Figur 2a mit IIb bezeichneter Ausschnitt in vergrößerter Darstellung;
- Figur 3a: skizzierte Darstellung einer Baugruppe der Unterdruck-Zuführeinrichtung gemäß Figur 1 in einer perspektivischen Explosionsansicht;
- Figur 3b: in Figur 3a mit IIIb bezeichneter Ausschnitt in vergrößerter Darstellung;
- Figur 4: skizzierte Darstellung eines Laufwagens der Unterdruck-Zuführeinrichtung gemäß Figur 1 in einer perspektivischen Explosionsansicht; und
- Figur 5: skizzierte Darstellung einer alternativen Ausgestaltung eines Trägers einer Unterdruck-Zuführeinrichtung in einem Querschnitt.

In der nachfolgenden Beschreibung sowie in den Figuren sind für identische oder einander entsprechende Merkmale jeweils dieselben Bezugszeichen verwendet.

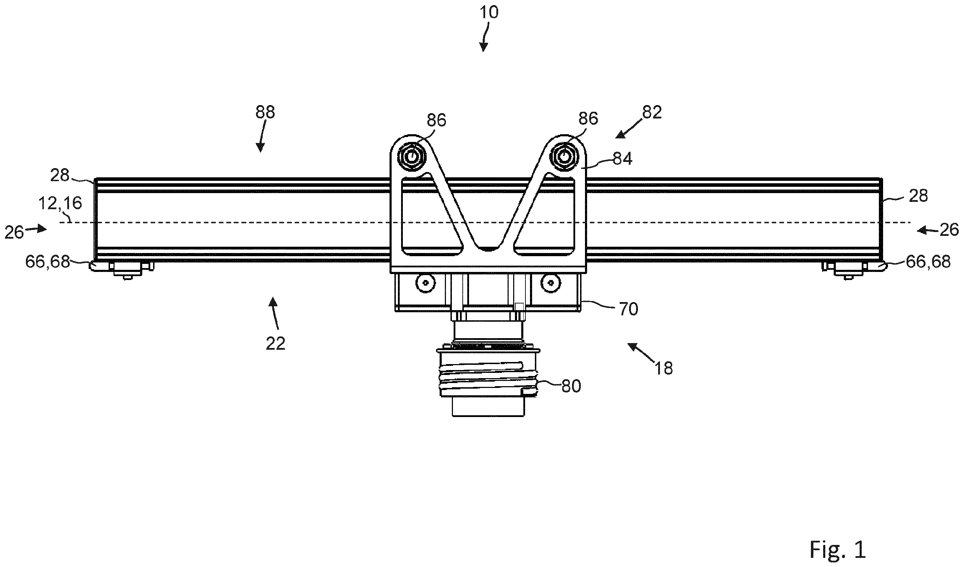

In Figur 1 ist eine Unterdruck-Zuführeinrichtung dargestellt, welche insgesamt mit dem Bezugszeichen 10 bezeichnet ist.

Die Unterdruck-Zuführeinrichtung 10 umfasst einen sich entlang einer zentralen Achse 12 erstreckenden Träger 14 und einen an dem Träger 14 entlang einer Verfahrachse 16 verfahrbaren Laufwagen 18. Die zentrale Achse 12 entspricht in dem dargestellten Beispiel der Verfahrachse 16.

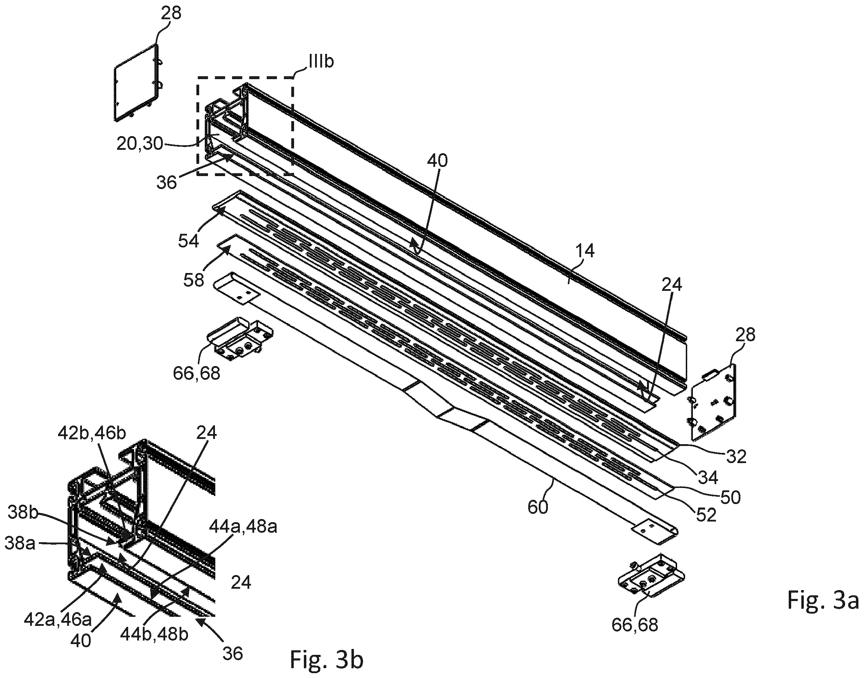

Der Träger 14 ist vorzugsweise als Hohlprofil ausgebildet mit einem innenliegenden Hohlraum 20 und einer sich an einer Abgreifseite 22 des Trägers 14, vorzugsweise entlang der gesamten Längserstreckung des Trägers 14, erstreckenden schlitzförmigen Trägeröffnung 24 (vgl. Figur 3a). Insbesondere ist der Träger 14 als C-Profil ausgebildet, dessen offene Seite die Trägeröffnung 24 bildet. Die offenen Stirnseiten 26 des Trägers 14 können mittels Verschlusskappen 28 fluiddicht verschlossen sein. Beispielhaft und bevorzugt handelt es sich bei dem Träger 14 um ein stranggepresstes Aluminiumprofil.

Der Hohlraum 20 ist über eine Unterdruckversorgung (nicht dargestellt) mit Unterdruck beaufschlagbar und bildet einen Versorgungskanal 30. Ein Abgreifen des Unterdrucks kann dann über die Trägeröffnung 24 an der Abgreifseite 22 des Trägers erfolgen (nachfolgend im Detail beschrieben).

Die Unterdruck-Zuführeinrichtung 10 weist bei dem in den Figuren 1 bis 4 dargestellten Ausführungsbeispiel ferner einen von dem Träger 14 separat bereitgestellten Einleger 32, der als Kunststoffeinleger ausgebildet ist, wobei auch andere Materialien denkbar sind. Der Kunststoffeinleger 32 ist plattenartig ausgebildet und erstreckt sich in einer Längsrichtung vorzugsweise entlang der gesamten Längserstreckung des Trägers 14 erstreckt (vgl. Figur 3a).

Der Kunststoffeinleger 32 weist eine Mehrzahl von Öffnungen 34 auf, welche vorzugsweise als den Kunststoffeinleger 32 durchsetzende Langlöcher ausgebildet sind. Insbesondere sind die Langlöcher derart orientiert, dass sich ihre lange Ausdehnung entlang der Längserstreckung des Kunststoffeinlegers 32 erstreckt (vgl. Figur 3a). Beispielhaft und bevorzugt sind die Öffnungen 34 in mehreren, gerade verlaufenden Öffnungsreihen angeordnet, welche längs zu der Längserstreckung des Kunststoffeinlegers 32 ausgerichtet sind und in einer Querrichtung des Kunststoffeinlegers 32 voneinander beabstandet angeordnet sind (vgl. Figur 3a). Vorzugsweise sind die Öffnungsreihen entlang der Längserstreckung des Kunststoffeinlegers 32 betrachtet zueinander versetzt angeordnet.

In einem montierten Zustand der Unterdruck-Zuführeinrichtung 10 ist der Kunststoffeinleger 32 in einer Nut 36 an der Abgreifseite 22 des Trägers 14 angeordnet. Wie aus den Figuren 3a und 3b ersichtlich, ist die Nut 36 durch zwei Nutabschnitte 38a, 38b gebildet, welche sich insbesondere entlang der gesamten Längserstreckung des Trägers 14 erstrecken und die Trägeröffnung 24 in einer Querrichtung des Trägers 14 begrenzen. In einem montierten Zustand des Kunststoffeinlegers 32 bedeckt dieser also die Trägeröffnung 24.

Der jeweilige Nutabschnitt 38a, 38b umfasst einen zu der Außenwand 40 des Trägers 14 an der Abgreifseite 22 parallelen Nutgrund 42a, 42b und eine sich vorzugsweise orthogonal zu dem Nutgrund 42a, 42b und parallel zu der zentralen Achse 12 erstreckende Seitenwand 44a, 44b. In dem dargestellten Beispiel ist der Nutgrund 42a, 42b beispielhaft durch einen im Hohlraum 20 angeordneten Trägersteg 46a, 46b gebildet und die Seitenwände 44a, 44b sind durch die einander zugewandten Längskanten 48a, 48b Trägers 14 gebildet (vgl. Figur 3b). In einem montierten Zustand des Kunststoffeinlegers 32 an dem Träger 14 liegt dieser dann an dem jeweiligen Nutgrund 42a, 42b und der jeweiligen Seitenwand 44a, 44b an. Insofern können in einer Richtung quer zu der Längserstreckung des Trägers 14 auftretende Kräfte zwischen Träger 14 und Kunststoffeinleger 32 übertragen werden.

Die Unterdruck-Zuführeinrichtung 10 umfasst ferner eine Dichtungsleiste 50, insbesondere in Form eines Dichtungsstreifens, welche sich vorzugsweise entlang der gesamten Längserstreckung des Kunststoffeinlegers 32 und des Trägers 14 erstreckt. Vorzugsweise ist die Dichtungsleiste 50 aus einem Kunststoff-Schaum hergestellt.

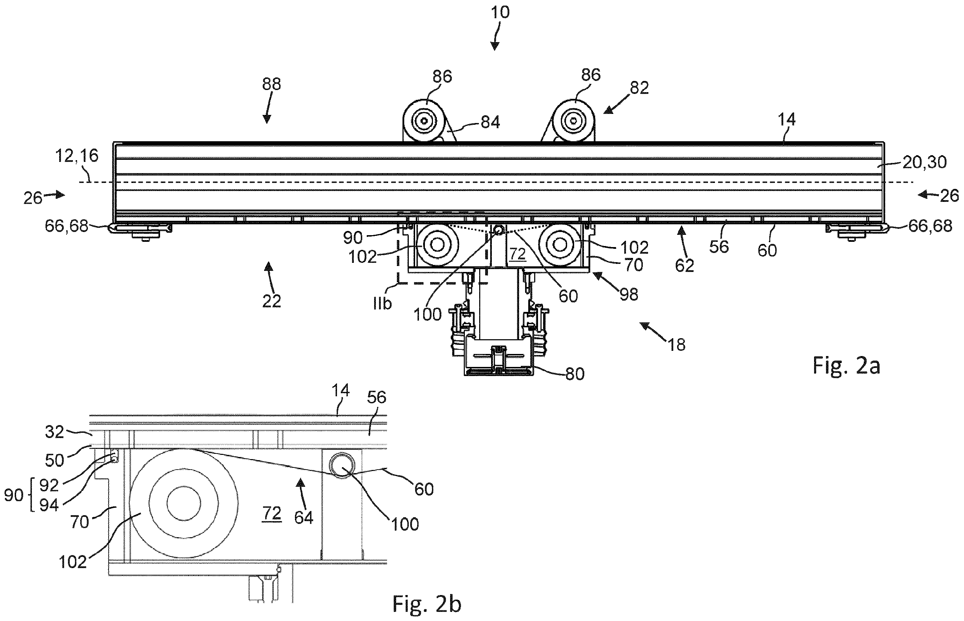

Die Dichtungsleiste 50 weist zu den Öffnungen 34 des Kunststoffeinlegers 32 korrespondierende Öffnungen 52 auf, welche beispielhaft und bevorzugt in analoger Weise zu den Öffnungen 34 des Kunststoffeinlegers 32 ausgebildet und angeordnet sind (vgl. Figur 3). In einem montierten Zustand ist die Dichtungsleiste 50 in einer Nut 54 an der der Abgreifseite 22 des Trägers 14 abgewandten Seite des Kunststoffeinlegers 32 angeordnet, insbesondere derart, dass die Öffnungen 34 des Kunststoffeinlegers 32 und die Öffnungen 52 der Dichtungsleiste 50 miteinander fluchten (vgl. Figur 2b). Die Öffnungen 34 des Kunststoffeinlegers 32 und die Öffnungen 52 der Dichtungsleiste 52 bilden dann gemeinsam mit der Trägeröffnung 24 die Versorgungskanalöffnungen 56 des Versorgungskanals 30.

Die Nut 36 zur Aufnahme des Kunststoffeinlegers 32 an der Abgreifseite 22 des Trägers 14, die Nut 54 zur Aufnahme der Dichtungsleiste 50 an dem Kunststoffeinleger 32, sowie der Kunststoffeinleger 32 und die Dichtungsleiste 50 sind insbesondere derart bemessen und aufeinander abgestimmt, dass eine Oberseite 58 der Dichtungsleiste 50 mit der Außenwand 40 des Trägers 14 an der Abgreifseite 22 bündig ist.

Es ist möglich, dass kein Kunststoffeinleger 32 vorgesehen ist. Dann kann die Dichtungsleiste 50 direkt in der Nut 36 des Trägers 14 angeordnet sein.

Die Unterdruck-Zuführeinrichtung 10 umfasst ferner ein Dichtungsband 60, welches dazu ausgebildet ist in einer Dichtlage (vgl. in Figur 2a mit Bezugszeichen 62 bezeichneten Pfeil) an der Dichtungsleiste 50 derart anzuliegen, dass die Öffnungen 52 der Dichtungsleiste 50 und somit die Versorgungskanalöffnungen 56 verschlossen sind. Das Dichtungsband 60 ist - wie nachfolgend noch detaillierter erläutert - aus der Dichtlage in eine Öffnungslage (vgl. in Figur 2b mit Bezugszeichen 64 bezeichneter Pfeil) von der Dichtungsleiste 50 abhebbar. Wie aus Figur 3a ersichtlich, weisen das Dichtungsband 60 und die Dichtungsleiste 50 vorzugsweise dieselbe Breite auf. Insbesondere ist das Dichtungsband 60 aus Stahl gefertigt.

Die Unterdruck-Zuführeinrichtung 10 umfasst ferner eine Dichtungsband-Spanneinrichtung 66 welche dazu ausgebildet ist, das Dichtungsband 60 entlang dessen Längserstreckung zu spannen. Zu diesem Zweck weist die Dichtungsband-Spanneinrichtung 66 zwei Klemmbacken 68 auf, welche jeweils ein Ende des Dichtungsbands 60 einspannen. Zur Einstellung der Spannung des Dichtungsbandes 60 kann z.B. vorgesehen sein, dass über eine Stellschraube der Abstand der Klemmbacken 68 verändert werden kann.

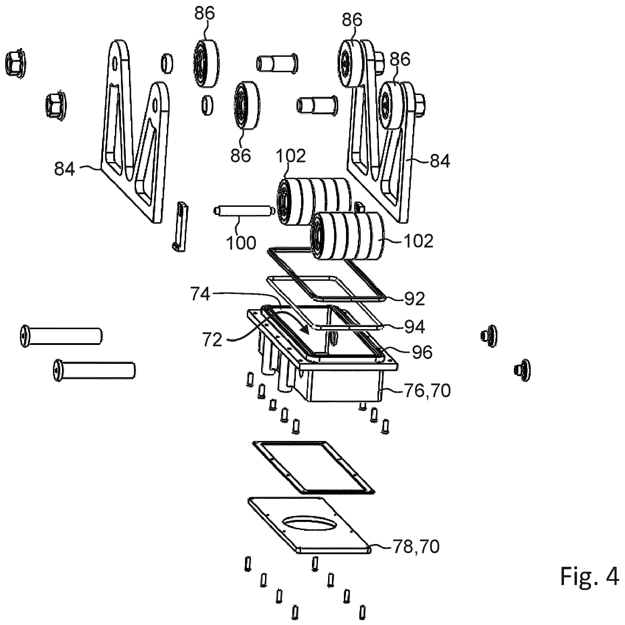

Der Laufwagen 18 weist einen Laufwagengrundkörper 70 auf, welcher eine Laufwagen-Saugkammer 72 begrenzt. Wie aus den Figuren 2a und 4 ersichtlich, weist die Laufwagen-Saugkammer 72 eine Saugkammeröffnung 74 auf, welche in einem montierten Zustand des Laufwagens 18 der Abgreifseite 22 des Trägers 14 zugewandt ist. Die Laufwagen-Saugkammer 72 ist also in Richtung der Abgreifseite 22 des Trägers 14 hin offen. In dem dargestellten Beispiel ist der Laufwagengrundkörper 70 aus einem Hauptkörper 76 und einer Deckelplatte 78 gebildet (vgl. Figur 4). Es ist auch möglich, dass der Laufwagengrundkörper 70 einstückig ausgebildet ist. An dem Laufwagengrundkörper 70 ist ferner ein Anschlussstutzen 80 zur Verbindung der Laufwagen-Saugkammer 72 mit einem Sauganschluss eines Sauggreifers (nicht dargestellt) angeordnet.

Der Laufwagen 18 ist über ein Fahrwerk 82 an dem Träger 14 verfahrbar gelagert. Das Fahrwerk 82 umfasst zwei an dem Laufwagengrundkörper 70 befestigte Fahrwerksträger 84 mit jeweils zwei Laufrollen 86, über die der Laufwagen 18 auf der der Abgreifseite 22 gegenüberliegenden Seite 88 des Trägers 14 verfahrbar gelagert ist (vgl. Figuren 1 und 2a).

Die Laufwagen-Saugkammer 72 ist mittels einer Laufwagen-Dichteinrichtung 90 an der Abgreifseite 22 des Trägers 14 abgedichtet. Die Laufwagen-Dichteinrichtung 90 weist eine erste Dichteinheit 92 und eine zweite Dichteinheit 94 auf. Die erste Dichteinheit 92 ist als Gleitdichtung ausgebildet und liegt in einem montierten Zustand des Laufwagens 18 an dem Träger 14 und an dem Dichtungsband 60 dichtend an (vgl. Figur 2b). Die zweite Dichteinheit 94 ist dazu ausgebildet, die erste Dichteinheit 92 gegen den Träger 14 bzw. gegen das Dichtungsband 60 mit einer Anpresskraft zu beaufschlagen. In dem dargestellten Beispiel ist die zweite Dichteinheit 94 als weiche Dichtschnur, beispielhaft und bevorzugt aus einem Moosgummi oder einem Silikon, ausgebildet. Wie aus den Figuren 2a und 4 ersichtlich, umlaufen die erste Dichteinheit 92 und die zweite Dichteinheit 94 die Saugkammeröffnung 74 und sind in einer entsprechenden Nut 96 in dem Laufwagengrundkörper 70 angeordnet.

Zur Beaufschlagung der Laufwagen-Saugkammer 72 mit Unterdruck, also zum Abgreifen des Unterdrucks von dem Versorgungskanal 30, weist der Laufwagen 18 eine Dichtungsband-Führungseinrichtung 98 auf, welche dazu ausgebildet ist, das Dichtungsband 60 innerhalb der Laufwagen-Saugkammer 72 über eine Abgreiflänge aus seiner Dichtlage 62 in eine Öffnungslage 64 zu überführen - also das Dichtungsband 60 derart von der Dichtungsleiste 50 abzuheben, dass innerhalb der Laufwagen-Saugkammer 72 eine Teilmenge der Öffnungen 52 der Dichtungsleiste 50 und somit eine Teilmenge der Versorgungskanalöffnungen 56 freigegeben ist.

Die Dichtungsband-Führungseinrichtung 98 umfasst eine Abheberolle 100, welche innerhalb der Laufwagen-Saugkammer 72 an dem Laufwagengrundkörper 70, insbesondere in einem Wälzlager, gelagert ist und über welche das Dichtungsband 60 geführt ist. Wie aus Figur 2b ersichtlich, ist die Abheberolle 100 von der Dichtungsleiste 50 derart beabstandet angeordnet, dass das Dichtungsband 60 von der Dichtungsleiste 50 abgehoben wird.

Die Dichtungsband-Führungseinrichtung 98 umfasst ferner zwei Außenrollen 102, welche dazu ausgebildet sind, das Dichtungsband 60 an die Dichtungsleiste 50 anzudrücken, also das Dichtungsband 60 aus der Öffnungslage 64 in die Dichtlage 62 zu überführen (vgl. Figur 2a). Die Außenrollen 102 sind innerhalb der Laufwagen-Saugkammer 72 angeordnet und an dem Laufwagengrundkörper 70, insbesondere mittels Wälzlager, gelagert. Wie aus Figur 2a ersichtlich, ist eine erste Außenrolle 102 entlang der Verfahrachse 16 des Laufwagens 18 betrachtet vor der Abheberolle 100 angeordnet und die zweite Außenrolle 102 ist entlang der Verfahrachse 16 des Laufwagens 18 betrachtet hinter der Abheberolle 100 angeordnet. Die Außenrollen 102 sind also derart angeordnet, dass sie das durch die Abheberolle 100 von der Dichtungsleiste 50 abgehobene Dichtungsband 60 vor und hinter der Abheberolle 100 wieder an die Dichtungsleiste 50 andrücken. Wie aus Figur 2a ersichtlich, ist das Dichtungsband 60 durch die Dichtungsband-Führungseinrichtung 102 lediglich innerhalb der Laufwagen-Saugkammer 72 aus seiner Dichtlage 62 in seine Öffnungslage 64 überführt. Das Dichtungsband 60 ist also nur innerhalb der Laufwagen-Saugkammer 72 von der Dichtungsleiste 50 abgehoben, während es außerhalb der Laufwagen-Saugkammer 72 an der Dichtungsleiste 50 die Öffnungen 52 verschließend anliegt. Eine Abgreiflänge, in welcher das Dichtungsband 60 von der Dichtungsleiste 50 abgehoben ist, ist also durch den Abstand der beiden Außenrollen 102 zueinander definiert. Wird der Laufwagen 18 entlang der Verfahrachse 16 verschoben, rollen die Abheberolle 100 und die Außenrollen 102 an dem Dichtungsband 60 ab und ermöglichen somit auch während einer Verfahrbewegung des Laufwagens 18 ein Abgreifen von Unterdruck.

Die Außenrollen 102 sind insbesondere derart bemessen, dass eine Breite einer jeweiligen Außenrolle 102 größer ist als die Breite des Dichtungsbands 60. Die Außenrollen 102 liegen dann abschnittsweise an der Außenwand 40 des Trägers 14 an der Abgreifseite 22 an.

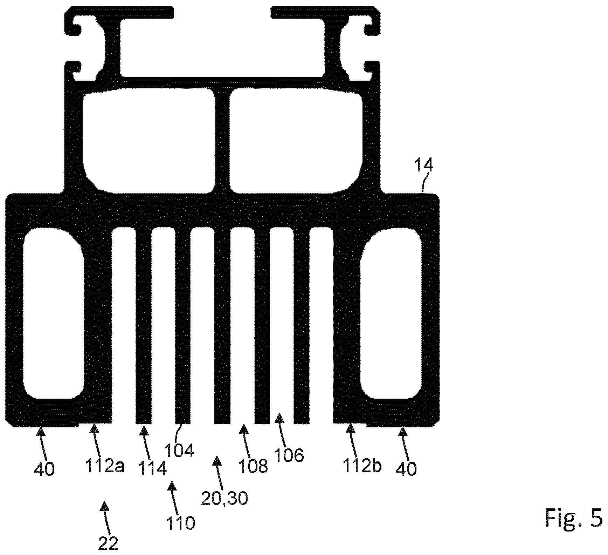

In Figur 5 ist eine weitere Ausgestaltung eines Trägers 14 in einem Querschnitt dargestellt. Der Träger 14 ist als Hohlprofil mit einem einseitig offenen Hohlraum 20 ausgebildet, wobei der Hohlraum 20 den Versorgungskanal 30 bildet. Die offene Seite des Hohlraums 20 bildet dann die Abgreifseite 22 des Trägers 14. Innerhalb des Hohlraums 20 sind mehrere Trägerzwischenwände 104 angeordnet, welche sich vorzugsweise über die gesamte Längserstreckung des Trägers 14 erstrecken und in einer Richtung quer zu der Längserstreckung des Trägers 14 voneinander beabstandet sind. Die Trägerzwischenwände 104 unterteilen den Versorgungskanal 30 in voneinander abgetrennte Saugkammern 106, welche in Richtung der Abgreifseite 22 offen sind. Insofern münden die Saugkammern 106 über jeweilige Saugkammeröffnungen 108 in die Abgreifseite 22.

Der Träger 14 weist ferner eine Nut 110 zur Anordnung einer vorstehend erläuterten Dichtleiste 50 auf, wobei die Nut 110 bei der in Figur 5 dargestellten Ausgestaltung des Trägers 14 durch zwei Nutabschnitte 112a, 112b an der Abgreifseite 22 des Trägers 14 und durch die freien Enden 114 der Trägerzwischenwände 104 gebildet ist. In einem montierten Zustand liegt die Dichtungsleiste 50 dann an den Nutabschnitten 112a, 112b und den freien Enden 114 der Trägerzwischenwände 104 an, insbesondere derart, dass eine Oberseite 88 der Dichtungsleiste 50 mit der Außenwand 40 an der Abgreifseite 22 des Trägers 14 bündig ist.

Bei einer Unterdruck-Zuführeinrichtung 10 mit einem in Figur 5 dargestellten Träger 14 ist insbesondere kein Kunststoffeinleger 32 vorgesehen. Ansonsten kann eine solche Unterdruck-Zuführeinrichtung 10 aber gemäß der unter Bezugnahme auf die Figuren 1 bis 4 beschriebenen Ausgestaltung aufgebaut sein.

## Patentansprüche

1. Unterdruck-Zuführeinrichtung (10), umfassend einen Träger (14) mit einem integrierten und mit Unterdruck beaufschlagbaren Versorgungskanal (30), und einen an dem Träger (14) verfahrbaren Laufwagen (18), wobei der Träger (14) an einer Abgreifseite (22) wenigstens eine Trägeröffnung (24) zum Abgreifen des Unterdrucks aufweist, wobei ein Dichtungsband (60) vorgesehen ist, welches dazu ausgebildet ist, in einer Dichtlage (62) die wenigstens eine Trägeröffnung (24) dichtend zu verschließen und welches aus der Dichtlage (62) in eine Öffnungslage (64) überführbar ist, in welcher das Dichtungsband von der Trägeröffnung (24) beabstandet ist,
wobei der Laufwagen (18) einen Laufwagengrundkörper (70) aufweist, welcher eine Laufwagen-Saugkammer (72) begrenzt,
wobei eine Laufwagen-Dichteinrichtung (90) vorgesehen ist, welche dazu ausgebildet ist, die Laufwagen-Saugkammer (72) an der Abgreifseite (22) des Trägers (14) abzudichten, wobei eine Dichtungsband-Führungseinrichtung (98) vorgesehen ist, welche dazu ausgebildet ist, das Dichtungsband (60) innerhalb der Laufwagen-Saugkammer (72) über eine Abgreiflänge aus seiner Dichtlage (62) in die Öffnungslage (64) abzuheben(), wobei in der Öffnungslage (64) das Dichtungsband (60) derart angeordnet ist, dass die wenigstens eine Trägeröffnung (24) zumindest teilweise freigegeben ist, **dadurch gekennzeichnet, dass** wenigstens eine von dem Träger (14) und dem Dichtungsband (60) separat bereitgestellte Dichtungsleiste (50) vorgesehen ist, welche zwischen Träger (14) und Dichtungsband (60) derart angeordnet ist, dass sie die wenigstens eine Trägeröffnung (24) bedeckt, wobei die Dichtungsleiste (50) eine Mehrzahl von Öffnungen (52) aufweist, wobei das Dichtungsband (60) in der Dichtlage (62) an der Dichtungsleiste (50) anliegt und wobei das Dichtungsband (60) in der Öffnungslage (64) von der Dichtungsleiste (50) beabstandet ist.

2. Unterdruck-Zuführeinrichtung (10) nach Anspruch 1, wobei die Öffnungen (52) in der Dichtungsleiste (50) als Langlöcher ausgebildet sind, wobei vorzugsweise die Langlöcher derart orientiert sind, dass ihre lange Ausdehnungsrichtung entlang einer Längserstreckung der Dichtungsleiste (50) verläuft.

3. Unterdruck-Zuführeinrichtung (10) nach einem der vorherigen Ansprüche, wobei die Dichtungsleiste (50) und das Dichtungsband (60) dieselbe Breite aufweisen.

4. Unterdruck-Zuführeinrichtung (10) nach einem der vorherigen Ansprüche, wobei die Dichtungsleiste (50) aus einem Kunststoff, insbesondere einem Kunststoff-Schaum hergestellt ist.

5. Unterdruck-Zuführeinrichtung (10) nach einem der vorherigen Ansprüche, wobei das Dichtungsband (60) aus Metall hergestellt ist.

6. Unterdruck-Zuführeinrichtung (10) nach einem der vorherigen Ansprüche, wobei die Abgreifseite (22) des Trägers (14) eine Nut (110,36) aufweist und wobei die Dichtungsleiste (50) in der Nut (110,36) angeordnet ist, insbesondere derart, dass eine Oberseite (58) der Dichtungsleiste (50) mit einer die Nut (110,36) begrenzenden Außenwand (40) des Trägers (14) an der Abgreifseite (22) bündig ist.

7. Unterdruck-Zuführeinrichtung (10) nach einem der Ansprüche 1 bis 5, umfassend einen Einleger (32), insbesondere aus Kunststoff, welcher zwischen Dichtungsleiste (50) und Träger (14) angeordnet ist und die Trägeröffnung (24) bedeckt, wobei der Einleger (32) in einer Richtung quer zu der Längserstreckung des Trägers (14) zumindest abschnittsweise an dem Träger (14) anliegt und wobei der Einleger (32) eine Mehrzahl von, insbesondere zu den Öffnungen (52) der Dichtungsleiste (50) korrespondierenden, Öffnungen (34) aufweist

8. Unterdruck-Zuführeinrichtung (10) nach Anspruch 7, wobei der Einleger (32) in einer Nut (36) an der Abgreifseite (22) des Trägers (14) angeordnet ist.

9. Unterdruck-Zuführeinrichtung (10) nach einem der Ansprüche 7 oder 8, wobei der Einleger (32) eine Nut (54) zur Aufnahme der Dichtungsleiste (50) aufweist.

10. Unterdruck-Zuführeinrichtung (10) nach einem der vorherigen Ansprüche, wobei die Laufwagen-Dichteinrichtung (90) eine erste Dichteinheit (92) und eine zweite Dichteinheit (94) umfasst, wobei die erste Dichteinheit (92) dazu ausgebildet ist, an dem Träger (14) und an dem Dichtungsband (60) dichtend anzuliegen und wobei die zweite Dichteinheit (94) dazu ausgebildet ist, die erste Dichteinheit (92) gegen den Träger (14) bzw. gegen das Dichtungsband (60) mit einer Anpresskraft zu beaufschlagen.

11. Unterdruck-Zuführeinrichtung (10) nach einem der vorherigen Ansprüche, wobei die Dichtungsband-Führungseinrichtung (98) wenigstens eine Abheberolle (100) umfasst, über welche das Dichtungsband (60) derart geführt ist, dass das Dichtungsband (60) aus der Dichtlage (62) in die Öffnungslage (64) abgehoben wird, und wobei die Dichtungsband-Führungseinrichtung (98) wenigstens zwei Außenrollen (102) zum Heranführen des Dichtungsbands (60) an die Dichtungsleiste (50) umfasst, wobei eine erstes Außenrolle (102) entlang einer Verfahrachse (16) des Laufwagens (18) betrachtet vor der wenigstens einen Abheberolle (100) angeordnet ist und wobei eine zweite Außenrolle (102) entlang der Verfahrachse (16) des Laufwagens (18) betrachtet hinter der wenigstens einen Abheberolle (100) angeordnet ist, wobei eine Breite einer jeweiligen Außenrolle (102) größer ist als eine Breite des Dichtungsbands (60) und wobei die wenigstens zwei Außenrollen (102) abschnittsweise an einer Außenwand (40) des Trägers (14) an der Abgreifseite (22) anliegen.

12. Unterdruck-Zuführeinrichtung (10) nach einem der vorherigen Ansprüche, wobei der Laufwagen (18) einen Fahrwerksträger (84) mit wenigstens einer Laufrolle (86) umfasst, wobei der Laufwagen (18) über die wenigstens eine Laufrolle (86) auf der der Abgreifseite (22) gegenüberliegenden Seite des Trägers (14) verfahrbar gelagert ist.

13. Unterdruck-Zuführeinrichtung (10) nach einem der vorherigen Ansprüche, wobei der Versorgungskanal (30) in mehrere, durch Trägerzwischenwände (104) voneinander abgetrennte Saugkammern (106) unterteilt ist, insbesondere wobei jede Saugkammer (106) über mindestens eine Saugkammeröffnung (108) in die Abgreifseite (22) des Trägers (14) mündet.
